# DEMANDE DE BREVET EUROPEEN

(11) **EP 1 505 284 A1**
(43) Date de publication de la demande: **09.02.2005**
(21) Numéro de dépôt: 04291992.8
(22) Date de dépôt: 04.08.2004
(51) Int. Cl.: F02D 41/00, F02B 61/02, F02B 37/00

(54) **Système de contrôle du fonctionnemment d'un moteur de véhicule à deux roues, de type scooter**

(30) Priorité: 06.08.2003 FR 0309708
(71) Demandeur: PEUGEOT MOTOCYCLES, 25350 Beaulieu Mandeure (FR)
(72) Inventeur: Vitel, Arnaud, 25550 Presentevillers (FR); Drouhard, Luc, 25640 Marchaux (FR)
(74) Mandataire: Habasque, Etienne Joel Jean-François

(57) **Abrégé**

Ce système de contrôle du fonctionnement d'un moteur (1) de véhicule à deux roues de type scooter, équipé d'un compresseur (4) des gaz d'admission dans le moteur, muni d'une soupape de sécurité (5) et entraîné par le moteur, est caractérisé en ce qu'il comporte une vanne de régulation (8) de la pression d'admission des gaz dans le moteur, dont le fonctionnement est piloté par une unité de traitement d'informations (9), recevant en entrée des données relatives aux conditions de pilotage du moteur, afin de réguler la pression d'admission des gaz et maintenir la puissance fournie par le moteur à une valeur égale ou inférieure à une valeur de seuil maximale prédéterminée.

## Description

La présente invention concerne un système de contrôle du fonctionnement d'un moteur de véhicule à deux roues, de type scooter.

On a déjà développé dans l'état de la technique, des moteurs de véhicules, qui sont équipés de compresseurs des gaz d'admission dans le moteur, ces compresseurs étant munis de soupape de sécurité et étant entraînés par le moteur.

La mise en place de tels compresseurs d'air d'admission sur ces véhicules a permis une augmentation importante du couple délivré par le moteur, améliorant les performances dynamiques du véhicule.

Le but de ces systèmes de motorisation est en effet de profiter au mieux, des avantages du compresseur dans les bas régimes et les phases de fonctionnement transitoires du moteur pour une recherche du couple maximal, notamment lors des accélérations et des reprises.

Cependant, l'intégration de ce type de compresseurs sur certains moteurs pose des problèmes, notamment de gestion de la puissance fournie par le moteur.

Le but de l'invention est donc de résoudre ces problèmes.

A cet effet, l'invention a pour objet un système de contrôle du fonctionnement d'un moteur de véhicule à deux roues de type scooter, équipé d'un compresseur des gaz d'admission dans le moteur, muni d'une soupape de sécurité et entraîné par le moteur, caractérisé en ce qu'il comporte une vanne de régulation de la pression d'admission des gaz dans le moteur, dont le fonctionnement est piloté par une unité de traitement d'informations, recevant en entrée des données relatives aux conditions de pilotage du moteur, afin de réguler la pression d'admission des gaz et maintenir la puissance fournie par le moteur à une valeur égale ou inférieure à une valeur de seuil maximale prédéterminée.

Suivant d'autres caractéristiques :
- les données de pilotage du moteur comprennent des informations de régime de rotation de celui-ci, des informations de consigne du pilote, à savoir la position du boîtier papillon et la vitesse d'ouverture ou de fermeture de ce boîtier et des informations relatives aux paramètres d'injection et d'avance à l'allumage ;
- l'unité de traitement d'informations est adaptée pour piloter la vanne de régulation en boucle ouverte ;
- l'unité de traitement d'informations reçoit en entrée une information de pression d'admission des gaz dans le moteur à partir d'un capteur correspondant et est adaptée pour piloter la vanne de régulation en boucle fermée ;
- le moteur est associé à un échangeur de chaleur et un boîtier de papillon des gaz, raccordés en série entre le compresseur et le moteur et la vanne de régulation est raccordée en dérivation entre l'échangeur et le boîtier de papil-Ion.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système de contrôle selon l'invention ; et
- la Fig.2 illustre les performances d'un moteur équipé d'un tel système de contrôle.

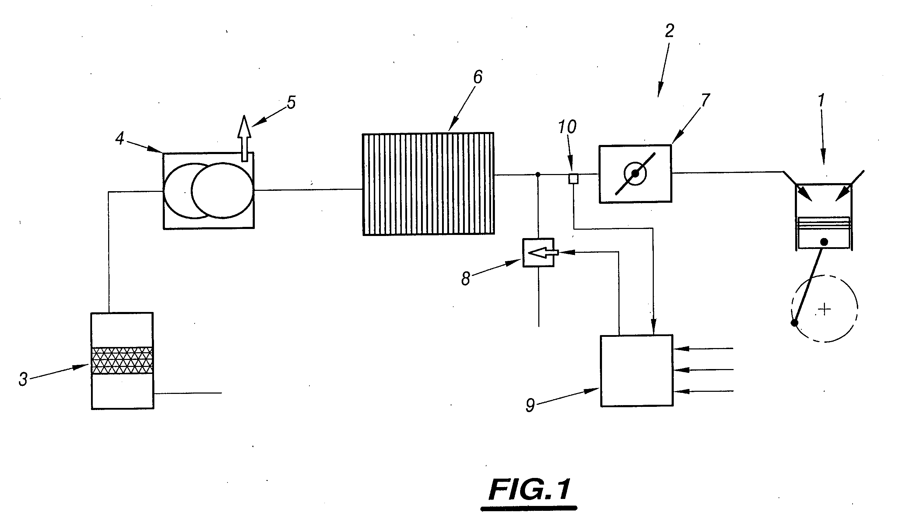

On a en effet illustré sur la figure 1, un moteur de véhicule à deux roues, de type scooter, désigné par la référence générale 1.

Ce moteur, par exemple monocylindre, est associé à des moyens d'admission d'air désignés par la référence générale 2, comprenant en série, un filtre à air 3, un compresseur 4 équipé d'une soupape de sécurité 5 et entraîné par le moteur, un échangeur de chaleur 6 et un boîtier de papillon des gaz désigné par la référence générale 7.

Dans le système selon l'invention, il est également prévu une vanne de régulation de la pression d'admission des gaz dans le moteur.

Cette vanne est désignée par la référence générale 8 sur cette figure et est par exemple branchée en dérivation entre l'échangeur 6 et le boîtier de papillon 7.

Le fonctionnement de cette vanne de régulation est piloté par une unité de traitement d'informations 9, recevant en entrée des données relatives aux conditions de pilotage du moteur, afin de réguler la pression d'admission des gaz et maintenir la puissance fournie par le moteur à une valeur égale ou inférieure à une valeur de seuil maximale prédéterminée fixée par ailleurs par exemple de façon réglementaire.

L'utilisation de la vanne de régulation et de l'unité de traitement d'informations de pilotage de celle-ci, permet de réguler la pression d'admission afin de maintenir la. puissance délivrée par le moteur à cette valeur ou à une valeur inférieure.

A cet effet, les données de pilotage du moteur entrées dans l'unité de traitement d'informations, peuvent comporter des informations relatives au régime de rotation de celui-ci, aux consignes du pilote du véhicule, c'est-à-dire la position du boîtier de papillon et/ou la vitesse d'ouverture ou de fermeture de celui-ci, mais également des paramètres d'injection et d'avance à l'allumage.

Deux types de commande de cette vanne de régulation peuvent être envisagés.

En effet, l'unité de traitement d'informations peut être adaptée pour piloter cette vanne en boucle ouverte, sur la base par exemple d'une cartographie prédéterminée.

Cependant, l'unité de traitement d'informations peut également recevoir une information relative à la pression d'admission des gaz dans le moteur, à partir d'un capteur correspondant 10 et être alors adaptée pour piloter celle-ci en boucle fermée comme cela est illustré.

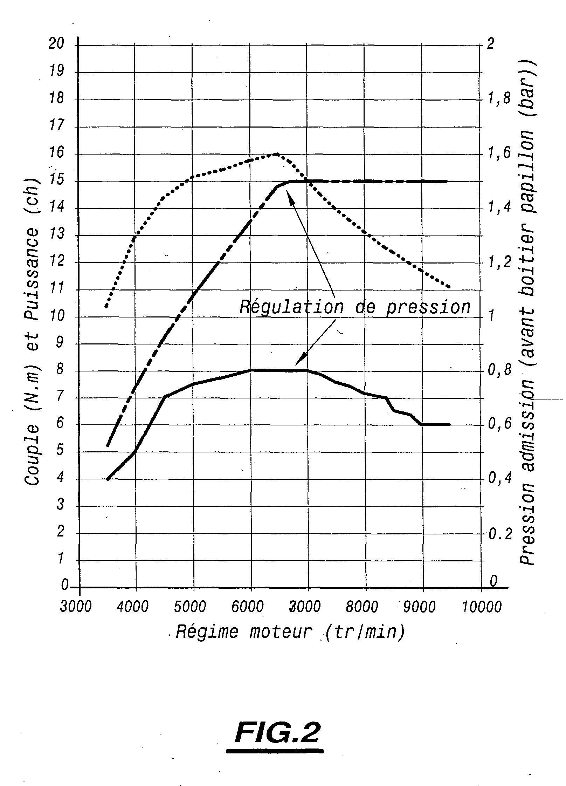

Ce fonctionnement est illustré sur la figure 2.

Quatre phases de régulation peuvent être distinguées.

Une première phase correspond à l'obtention d'un couple maximal, par la régulation de la pression à l'admission à la valeur maximale de celle-ci.

Une autre phase concerne le maintien de la puissance maximale également obtenue par régulation de la pression à l'admission.

A partir du couple maximal, c'est-à-dire de la pression maximale, le maintien de la puissance est obtenu en réduisant la pression de suralimentation en fonction du régime et du couple.

Une autre phase concerne la protection du moteur et des organes de celui-ci.

La réduction de la pression à haut régime permet une réduction de la pression moyenne effective dans le cylindre et par voie de conséquence, une réduction des sollicitations mécaniques des organes du moteur (roulements, cages à aiguilles, etc...).

Enfin, la dernière phase concerne la protection du compresseur.

En effet, la réduction de la pression à haut régime améliore les rendements mécanique et thermique du compresseur.

La réduction de la température et de la pression limite également les sollicitations mécaniques des organes du moteur (roulement, joint d'étanchéité, etc..).

On conçoit alors que grâce à une telle structure, il est possible de gérer la puissance des moteurs associés à ce type de compresseurs, pour optimiser leur fonctionnement en termes de couple et de puissance, tout en assurant une protection des organes mécaniques de ceux-ci, par une gestion de la pression à l'admission.

## Revendications

1. Système de contrôle du fonctionnement d'un moteur (1 ) de véhicule à deux roues de type scooter, équipé d'un compresseur (4) des gaz d'admission dans le moteur, muni d'une soupape de sécurité (5) et entraîné par le moteur, **caractérisé en ce qu'**il comporte une vanne de régulation (8) de la pression d'admission des gaz dans le moteur, dont le fonctionnement est piloté par une unité de traitement d'informations (9), recevant en entrée des données relatives aux conditions de pilotage du moteur, afin de réguler la pression d'admission des gaz et maintenir la puissance fournie par le moteur à une valeur égale ou inférieure à une valeur de seuil maximale prédéterminée.

2. Système selon la revendication 1, **caractérisé en ce que** les données de pilotage du moteur comprennent des informations de régime de rotation de celui-ci, des informations de consigne du pilote, à savoir la position du boîtier papillon et la vitesse d'ouverture ou de fermeture de ce boîtier et des informations relatives aux paramètres d'injection et d'avance à l'allumage.

3. Système selon la revendication 1 ou 2, **caractérisé en ce que** l'unité de traitement d'informations (9) est adaptée pour piloter la vanne de régulation (8) en boucle ouverte.

4. Système selon la revendication 1 ou 2, **caractérisé en ce que** l'unité de traitement d'informations (9) reçoit en entrée une information de pression d'admission des gaz dans le moteur à partir d'un capteur correspondant (10) et est adaptée pour piloter la vanne de régulation (8) en boucle fermée.

5. Système selon l'une quelconque des revendications précédentes, **caractérisé en ce que** le moteur (1) est associé à un échangeur de chaleur (6) et un boîtier de papillon des gaz (7), raccordés en série entre le compresseur (4) et le moteur (1) et **en ce que** la vanne de régulation (8) est raccordée en dérivation entre l'échangeur (6) et le boîtier de papillon (7).
